Europäisches Patentamt

European Patent Office

Office européen des brevets

(19)

(11) Publication number: **0 350 217 A2**

# EUROPEAN PATENT APPLICATION

(21) Application number: **89306664.7**

(22) Date of filing: **30.06.89**

(51) Int. Cl.4: **B01D 17/02 , B01D 17/04 , B01D 19/00**

(30) Priority: **04.07.88 GB 8815855**

(43) Date of publication of application:
**10.01.90 Bulletin 90/02**

(84) Designated Contracting States:
**AT BE CH DE ES FR GB GR IT LI LU NL SE**

(71) Applicant: **NETZSCH MASTERMIX LIMITED**
**Vigo Place Aldridge**
**Walsall West Midlands WS9 8UG(GB)**

(72) Inventor: **English, Robert William**
**8 Cloister WA1k Whittington**
**Lichfield WS14 9NL(GB)**

(74) Representative: **Hands, Horace Geoffrey et al**
**LEWIS W. GOOLD & CO. Whitehall Chambers**
**23, Colmore Row**
**Birmingham B3 2BL(GB)**

(54) **Solvent recovery.**

(57) Solvent recovery and separation from contaminant is accomplished by heating the liquid and feeding it to a centrifuge located in a vacuum chamber. Solvent evaporates from the surfaces of the centrifuge and is extracted via the vacuum system for re-use whereas the more heavily contaminated portions of the liquid flow to the outer periphery of the centrifuge where they are collected in an extraction pipe and separated.

EP 0 350 217 A2

## SOLVENT RECOVERY

The conventional method for industrial solvent recovery involves the use of a still and a condenser, and operates on the basis that the solvent vaporises at a lower temperature than the contaminant. Hence, if batch operated the liquor in the still becomes more heavily contaminated and leaner in solvent, and the recovery rate reduces as processing continues: the residue has to be disposed of or if added to fresh stocks of material, the contaminant proportion increases progressively batch-to-batch again with reduced efficiency of the recovery process.

Further, with these known processes, the heat transfer surfaces of the still become contaminated, which itself reduces the heat transfer rate and makes the operation less economic. Cleaning the surfaces restores the economic efficiency but needs downtime which itself is a cost contributory factor.

According to the invention a method of separating liquid solvent from contaminant comprises the steps of heating the contaminated solvent, feeding the hot contaminated solvent to a centrifuge, collecting contaminant rich liquor in a first flow passage at the outer periphery of the centrifuge and removing solvent vapour through a second passage.

The centrifuge may operate continuously, and at reduced pressure as a vacuum centrifuge. The centrifuge may have a bowl with a rim located collector at which the highly contaminated liquor residue is collected and discharged for example via a check valve.

The pressure within the heater is inherently substantially higher than the centrifuge. As the solvent passes from heater to centrifuge a pressure drop may be used to assist in causing the evaporation. The centrifugal action helps to discharge the contaminated material, instead of allowing it to build up, and also assists in forming a thin sheared film.

The invention may be used in recovery of solvent, for example for re-use, but also in cases where the primary object is concentration of the residue by separation of the solvent, and the term contaminant is to be interpreted accordingly.

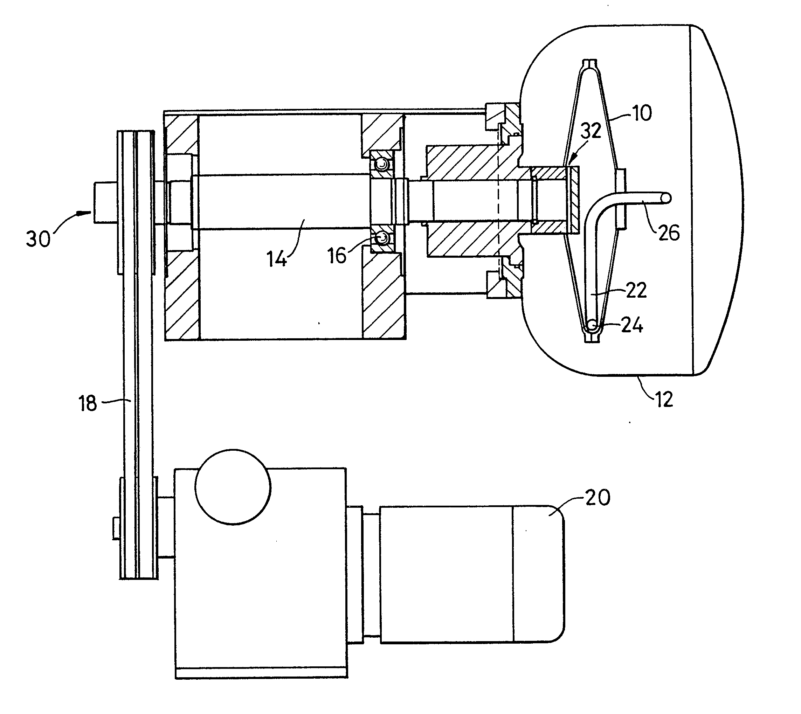

Apparatus for carrying out the method of the invention is illustrated in the accompanying drawing in which the sole figure is a part-sectional elevation.

Turning now to the drawing, centrifuge bowl 10 is located in a vacuum chamber 12 and is mounted at the end of a hollow shaft 14 supported by bearings 16 for rotation of the shaft and bowl.

The shaft 14 is driven for example by belts or chains 18 from a motor 20.

Collector pipe 22 which remains stationary has an open end 24 located in the outer periphery of the centrifuge bowl 10. The pipe 22 extends generally radially and then axially of the portion 26 to pass through a seal (not shown) in the side wall of the vacuum chamber 12 and then to a collection system.

Also provided is an appropriate vacuum pump (not shown) for lowering the pressure in the chamber 12. A passage possibly with appropriate valves is used for collecting and removing solvent vapour.

The contaminated solvent is heated in a heater (not shown) and fed through appropriate pipework to the shaft 14 at end 30 whence it flows through the shaft to be delivered through radial passage 32 into the interior of the centrifuge. The dimensions of those passages may be varied to suit the viscosity of the product. The contaminated solvent spreads out as a thin film and flows to the rim and it will be appreciated that in such flow the solvent evaporates and passes from the interior of the centrifuge to the exterior of the centrifuge and to the interior of the vacuum chamber and then to the separate collection system. The heavier contaminated fraction flows to the outer periphery of the bowl where it is continuously collected and removed.

The solvent vapour may pass to a condenser (not shown) or is possibly re-used in the vapour form.

## Claims

1. A method of separating liquid solvent from contaminant comprising the steps of
   1) heating the contaminated solvent,
   2) feeding the hot contaminated solvent to a centrifuge
   3) collecting contaminant rich liquid in a first flow passage at the outer periphery of the centrifuge and
   4) removing solvent vapour through a second passage.

2. A method as claimed in Claim 1 wherein the centrifuge is located in a vacuum chamber.

3. A method as claimed in Claim 1 wherein the hot liquid is fed to the centrifuge through a hollow shaft which drives the centrifuge.

4. A method as claimed in Claim 1 wherein the said first flow passage is in a tube at the outer periphery of the centrifuge.

5. A method of separating liquid solvent from contaminant as claimed in any preceding claim and as described with reference to the accompanying drawings.